# EUROPEAN PATENT SPECIFICATION

(11) **EP 2 807 200 B1**
(45) Date of publication and mention of the grant of the patent: **11.12.2019**
(21) Application number: 13700775.3
(22) Date of filing: 22.01.2013
(51) Int. Cl.: C08G 18/08, C08G 18/28, C08G 18/32, C08G 18/48

(54) **POLYURETHANE DISPERSIONS FOR COATING TEXTILES**
POLYURETHANDISPERSIONEN ZUM BESCHICHTEN VON TEXTILIEN
DISPERSIONS DE POLYURÉTHANE POUR LE REVÊTEMENT DE TEXTILES

(30) Priority: 25.01.2012 EP 12152421
(43) Date of publication of application: 03.12.2014
(73) Proprietor: Covestro Deutschland AG, 51373 Leverkusen (DE)
(72) Inventor: GRABLOWITZ, Hans Georg, 50733 Köln (DE); FELLER, Thomas, 42659 Solingen (DE); ZHUANG, Wei, 51373 Leverkusen (DE)
(74) Representative: Levpat
(86) International application number: PCT/EP2013/051142
(87) International publication number: WO 2013/110606

(56) References cited:
- EP-A1- 2 221 330
- WO-A1-2006/047746
- US-A- 5 700 867

## Description

The present invention relates to aqueous polyurethane dispersions containing an anionically hydrophilized and non-ionically hydrophilized polyurethane polymer with incorporated dihydrazide compounds, to a process for preparing them, and to their use for preparing coated textiles.

Coating materials which are based on polyurethanes have a large part to play on account of their outstanding properties, such as high scratch resistance and low-temperature flexibility, for example. On the basis of increasing environmental provisions and other statutory provisions, particular importance is being accorded to the solvent-free, aqueous polyurethanes. Coatings based on polyurethane dispersions are employed in different applications, such as, for example, in textile coating, plastics coating, automotive finishing or the coating of glass fibre.

Functionalized polymers for coatings generally afford the opportunity, in a further operating step, to carry out polymer-analogous reactions in order to enhance the properties of the coating. In such reactions a frequent attempt is made to achieve a high molar mass, since a high molar mass is generally beneficial to the end properties of the coating, such as solvent stability and mechanical properties, for example. A high molar mass can be obtained by using chain-extenders such as hydrazine, optionally in form of its hydrate. However, the use of hydrazine in the preparation of polymers is problematic since hydrazine is toxic. Thus, after completion of the polymerisation reaction the amount of hydrazine residues in the polyurethane dispersion has to be monitored leading to additional process steps.

Usually the aqueous resins have to be formulated with other binders and additives before they can be applied as a coating. Furthermore the processing of the coating formulations is often associated with mechanical stress and both aforementioned factors increase the probability that the polymer particles start to flocculate or even coagulate. Therefore rather stable dispersion particles are always benefical in these applications.

US 4,447,571 and US5700867 are related to aqueous, anionically hydrophiliced polyurethane dispersions that contain hydrazide compounds. These hydrazide compounds are either employed as additives or chain-extenders. Hydrazide compounds are not considered as being toxic.

Surprisingly it has been found that aqueous polyurethane dispersions containing an anionically hydrophilized and non-ionically hydrophilized polyurethane polymers with incorporated dihydrazide compounds exhibit less tendency towards coagulation and lead to coatings showing o improved mechanical properties.

The present invention accordingly provides aqueous polyurethane dispersions containing an anionically hydrophilized and non-ionically hydrophilized polyurethane polymer comprising
a) 8 weight-% to 40 weight-% of one or more polyisocyanate compounds selected from the group consisting of aromatic polyisocyanates having a functionality ≥ 2, aliphatic polyisocyanates having a functionality ≥ 2 and cycloaliphatic polyisocyanates having a functionality ≥ 2,
b) 40 weight-% to 85 weight-% of one or more polyhydroxy compounds with a molar mass Mₙ of 400 to 8000 g/mol and a functionality of 1.5 to 6,
c) optionally one or more polyhydroxy compounds with a molar mass < 400 g/mol and a functionality of 2 to 4,
d) 1 weight-% to 25 weight-% of one or more nonionic, isocyanate-reactive hydrophilicizing agents,
e) 0.5 weight-% to 7 weight-% of one or more isocyanate-reactive, ionic or potentially ionic hydrophilicizing agents,
f) optionally one or more polyamines having a molar mass of 32 to 400 g/mol and a functionality of 1 to 3, and
g) 0.1 weight-% to 4 weight-% of one or more dihydrazide compounds,
wherein the stated amounts relate to all structural components of the polyurethane polymer and the sum of the stated amounts adds up to 100 weight-%,
wherein the aqueous polyurethane dispersions of the invention, are prepared by first reacting components a), b), optionally c), d) and e), if e) does not contain any primary or secondary amino groups, to prepare a polyurethane prepolymer containing free isocyanate groups in an amount of 1 weight-% to 5 weight-% related to weight of the polyurethane prepolymer which in a further step is chain-extended with optionally f) and g) and e), if e) does contain any primary or secondary amino groups, and is transferred to the aqueous phase.

In another embodiment the present invention accordingly provides aqueous polyurethane dispersions containing an anionically hydrophilized and non-ionically hydrophilized polyurethane polymer comprising
a) 8 weight-% to 40 weight-% of one or more polyisocyanate compounds selected from the group consisting of aliphatic polyisocyanates having a functionality ≥ 2 and cycloaliphatic polyisocyanates,

In another embodiment the present invention accordingly provides aqueous polyurethane dispersions containing an anionically hydrophilized and non-ionically hydrophilized polyurethane polymer comprising
a) 8 weight-% to 40 weight-% of one or more polyisocyanate compounds selected from the group consisting of aliphatic polyisocyanates having a functionality ≥ 2 and cycloaliphatic polyisocyanates,
b) 40 weight-% to 85 weight-% of one or more polyhydroxy compounds with a molar mass Mₙ of 400 to 8000 g/mol and a functionality of 1.5 to 6,
c) optionally one or more polyhydroxy compounds with a molar mass < 400 g/mol and a functionality of 2 to 4,
d) 1 weight-% to 25 weight-% of one or more nonionic, isocyanate-reactive hydrophilicizing agents,
e) 0.5 weight-% to 7 weight-% of one or more isocyanate-reactive, ionic or potentially ionic hydrophilicizing agents,
f) 0.5 weight-% to 10 weight-% of one or more polyamines having a molar mass of 32 to 400 g/mol and a functionality of 1 to 3, and
g) 0.1 weight-% to 4 weight-% of one or more dihydrazide compounds,
wherein the stated amounts relate to all structural components of the polyurethane polymer and the sum of the stated amounts adds up to 100 weight-%.

Preferably, the inventively claimed polyurethane polymer described herein contains
10 weight-% to 40 weight-% of component a),
42 weight-% to 80 weight-% of component b),
2 weight-% to 21 weight-% of component d),
0.7 weight-% to 5 weight of component e),
0.5 weight-% to 7 weight-% of component f), and
0.2 weight-% to 3 weight-% of component g),
wherein the stated amounts relate to all structural components of the polyurethane polymer and the sum of the stated amounts adds up to 100 weight-%.

Aromatic polyisocyanates having a functionality ≥ 2 are selected from the group consisting of polytoluylene diisocyanate (TDI), diphenylmethane diisocyanate (MDI) and polymethylenepolyphenyl polyisocyanate (crude MDI).

In the sense of this invention, aliphatic polyisocyanates do not contain NCO groups which are directly pendent from an aromatic structure.

Preferably, polyisocyanates are selected from the group consisting of hexamethylene diisocyanate (HDI), 2,2,4- and 2,4,4-trimethyl-1,6-hexamethylene diisocyanate, tetramethoxybutane 1,4-diisocyante, butane-1,4-diisocyanate, dicyclohexylmethane diisocyanate, cyclohexane 1,3- and 1,4-diisocyanate, 1,12-dodecamethylene diisocyanate, diisocyanates of dimeric fatty acids; lysine methyl ester diisocyanate, 1-isocyanato-3,3,5-trimethyl-5-isocyanatomethylcyclohexane (i.e. isophorone diisocyanate or IPDI), hydrogenated diphenylmethane diisocyanate, hydrogenated 2,4- and 2,6-tolylene diisocyanate. More preferably, polyisocyanates are selected from the group consisting of hexamethylene diisocyanate (HDI), dicyclohexylmethane diisocyanate and isophorone diisocyanate.

Proportionally it is also possible to use polyisocyanates having a functionality > 2. These include modified diisocyanates with uretdione, isocyanurate, urethane, allophanate, biuret, iminooxadiazinedione and/or oxadiazinetrione structure.

The compounds in question are preferably aliphatic polyisocyanates or aliphatic polyisocyanate mixtures of the aforementioned kind with an average functionality of 2 to 4, preferably 2 to 2.6 and more preferably 2 to 2.4.

Polymer polyols which can be used as compounds b) have a molecular weight Mₙ of 400 to 8000 g/mol, preferably of 400 to 6000 g/mol and more preferably of 500 to 3000 g/mol. Their hydroxyl number is 22 to 400 mg KOH/g, preferably 30 to 300 mg KOH/g and more preferably 40 to 250 mg KOH/g, and they have an OH functionality of 1.5 to 6, preferably of 1.8 to 3 and more preferably of 1.9 to 2.1.

Polyols b) for the purposes of the present invention are the organic polyhydroxyl compounds which are known in the technology of polyurethane coatings, such as, for example, the customary polyester polyols, polyether polycarbonate polyol, polyacrylate polyols, polyurethane polyols, polycarbonate polyols, polyether polyols, polyester polyacrylate polyols and also polyurethane polyacrylate polyols, polyurethane polyester polyols, polyurethane polyether polyols, polyurethane polycarbonate polyols, polyester polycarbonate polyols, phenol/formaldehyde resins, alone or in mixtures. Preference is given to polyester polyols, polyether polyols or polycarbonate polyols.

Polyether polyols include, for example, the polyaddition products of styrene oxides, of ethylene oxide, propylene oxide, tetrahydrofuran, butylene oxide, of epichlorohydrin, and also their mixed addition products and graft products, and also the polyether polyols obtained by condensation of polyhydric alcohols or mixtures thereof and the polyether polyols obtained by alkoxylation of polyfunctional alcohols, amines and amino alcohols.

Suitable hydroxy-functional polyethers have OH functionalities of 1.5 to 6.0, preferably 1.8 to 3.0, OH numbers of 50 to 700, preferably of 100 to 600 mg KOH/g solids, and molecular weights Mₙ of 400 to 4000 g/mol, preferably of 400 to 3500, such as, for example, alkoxylation products of hydroxy-functional starter molecules such as ethylene glycol, propylene glycol, butanediol, hexanediol, trimethylolpropane, glycerol, pentaerythritol, sorbitol or mixtures of these and also other hydroxy-functional compounds with propylene oxide or butylene oxide. Preferred as polyether component b) are polypropylene oxide polyols and polytetramethylene oxide polyols having a molecular weight of 400 to 4000 g/mol. In this context the particularly low molecular weight polyether polyols, with correspondingly high OH contents, may be water-soluble. Particular preference, however, is given to water-insoluble polypropylene oxide polyols and polytetramethylene oxide polyols, having a molar weight of 500 to 3000 g/mol, and also to their mixtures. Highly suitable examples of polyester polyols b) are the conventional polycondensates of diols and also, if desired, triols and tetraols, and dicarboxylic and also, if desired, tricarboxylic and tetracarboxylic acids, or hydroxycarboxylic acids or lactones. Instead of the free polycarboxylic acids it is also possible to use the corresponding polycarboxylic anhydrides or corresponding polycarboxylic esters of lower alcohols to prepare the polyesters. Examples of suitable diols are ethylene glycol, butylene glycol, diethylene glycol, triethylene glycol, polyalkylene glycols such as polyethylene glycol, and also 1,2-propanediol, 1,3-propanediol, butane-1,3-diol, butane-1,4-diol, hexane-1,6-diol and isomers, neopentyl glycol or neopenthyl glycol hydroxypivalate, the three last-mentioned compounds being preferred. In order to obtain a functionality > 2 it is possible if desired to make proportional use of polyols having a functionality of 3, examples being trimethylolpropane, glycerol, erythritol, pentaerythritol, trimethylolbenzene or trishydroxyethyl isocyanurate.

Examples of suitable dicarboxylic acids include phthalic acid, isophthalic acid, terephthalic acid, tetrahydrophthalic acid, hexahydrophthalic acid, cyclohexanedicarboxylic acid, adipic acid, azelaic acid, sebacic acid, glutaric acid, tetrachlorophthalic acid, maleic acid, fumaric acid, itaconic acid, malonic acid, suberic acid, 2-methylsuccinic acid, 3,3-diethylglutaric acid, 2,2-dimethylsuccinic acid. Anhydrides of these acids can likewise be used, where they exist. For the concerns of the present invention, the anhydrides are consequently encompassed by the expression "acid". It is also possible to use monocarboxylic acids, such as benzoic acid and hexanecarboxylic acid, subject to the proviso that the average functionality of the polyol is ≥ 2. Saturated aliphatic or aromatic acids are preferred, such as adipic acid or isophthalic acid. As a polycarboxylic acid, to be used as well in smaller quantities if desired, is trimellitic acid.

Hydroxycarboxylic acids which can be used as well as reaction participants in the preparation of a polyester polyol having terminal hydroxyl groups are, for example, succinic acid, hydroxycaproic acid, hydroxybutyric acid, hydroxydecanoic acid, hydroxystearic acid and the like. Suitable lactones are, for example, ε-caprolactone, butyrolactone and homologues thereof.

Preference is given to polyester polyols b) based on butanediol and/or neopentyl glycol and/or hexanediol and/or ethylene glycol and/or diethylene glycol with adipic acid and/or phthalic acid and/or isophthalic acid. Particularly preferred are polyester polyols b) based on butanediol and/or neopentyl glcyol and/or hexanediol with adipic acid and/or phthalic acid.

The contemplated polycarbonate polyols are obtainable by reaction of carbonic acid derivatives, for example diphenyl carbonate, dimethyl carbonate or phosgene, with diols. Examples of suitable such diols include ethylene glycol, 1,2- and 1,3-propanediol, 1,3- and 1,4-butanediol, 1,6-hexanediol, 1,8-octanediol, neopentyl glycol, 1,4-bishydroxymethylcyclohexane, 2-methyl-1,3-propanediol, 2,2,4-trimethylpentane-1,3-diol, dipropylene glycol, polypropylene glycols, dibutlyene glycol, polybutylene glycols, bisphenol A, tetrabromobisphenol A, but also lactone modified diols. Preferably the diol component contains 40% to 100% by weight of 1,6-hexanediol and/or hexane diol derivatives, preferably those which as well as terminal OH groups contain ether groups or ester groups, examples being products which are obtained by reacting 1 mol of hexanediol with at least 1 mol, preferably 1 to 2 mol, of ε-caprolactone, or by etherifying hexanediol with itself to form the di- or trihexylene glycol. Polyether-polycarbonate polyols as well can be used.

Preference is given to polycarbonate polyols b) based on dimethyl carbonate and hexanediol and/or butanediol and/or ε-caprolactone. Especially preferred are polycarbonate polyols based on dimethyl carbonate and hexanediol and/or ε-caprolactone.

The low molecular weight polyols c) which can be used if desired to synthesize the polyurethane resins have the effect in general of stiffening and/or branching the polymer chain. The molecular weight is situated preferably between 62 and 200 and their functionality is preferably 2 to 3. Suitable polyols c) may contain aliphatic, alicyclic or aromatic groups. Mention may be made here, for example, of the low molecular weight polyols having up to about 20 carbon atoms per molecule, such as, for example, ethylene glycol, diethylene glycol, triethylene glycol, 1,2-propanediol, 1,3-propanediol, 1,4-butanediol, 1,3-butylene glycol, cyclohexanediol, 1,4-cyclohexanedimethanol, 1,6-hexanediol, hydroquinone dihydroxyethyl ether, bisphenol A (2,2-bis(4-hydroxyphenyl)propane), hydrogenated bisphenol A (2,2-bis(4-hydroxycyclohexyl)propane) and also mixtures thereof, and also trimethylolpropane, glycerol or pentaerythritol. Ester diols such as, for example, δ-hydroxybutyl-ε-hydroxy-caproic ester, ω-hydroxyhexyl-γ-hydroxybutyric ester, β-hydroxyethyl adipate or bis(β-hydroxyethyl) terephthalate can be used as well. Hexanediol and/or trimethylolpropane and/or butanediol are preferred. Trimethylolpropane and/or butanediol are particularly preferred.

Preferably, compounds d) are polyoxyalkylene ethers which contain at least one hydroxyl or amino group. More preferably, these polyethers contain a fraction of 30% by weight to 100% by weight of units derived from ethylene oxide. Those contemplated include polyethers of linear construction with a functionality of between 1 and 2, but also compounds of the general formula (I), 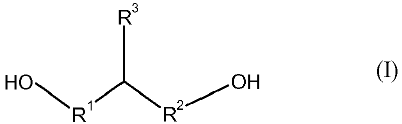 wherein
- R¹ and R²: independently of one another each denote a divalent aliphatic, cycloaliphatic or aromatic radical having 1 to 18 C atoms, which may be interrupted by oxygen and/or nitrogen atoms, and
- R³: denote an alkoxy-terminated polyethylene oxide radical.

Other examples of compounds d) having a nonionically hydrophilicizing action include monofunctional polyalkylene oxide polyether alcohols containing on average 5 to 70, preferably 7 to 55, ethylene oxide units per molecule, of the kind obtainable conventionally by alkoxylation of suitable starter molecules (e.g. in Ullmanns Encyclopädie der technischen Chemie, 4th edition, Volume 19, Verlag Chemie, Weinheim pp. 31-38).

Suitable starter molecules are, for example, saturated monoalcohols such as methanol, ethanol, n-propanol, isopropanol, n-butanol, isobutanol, sec-butanol, the isomers pentanols, hexanols, octanols and nonanols, n-decanol, n-dodecanol, n-tetradecanol, n-hexadecanol, n-octadecanol, cyclohexanol, the isomeric methylcyclohexanols or hydroxymethylcyclohexane, 3-ethyl-3-hydroxymethyloxetane or tetrahydrofurfuryl alcohol, diethylene glycol monoalkyl ethers such as, for example, diethylene glycol monobutyl ether, unsaturated alcohols such as allyl alcohol, 1,1-dimethylallyl alcohol or oleyl alcohol, aromatic alcohols such as phenol, the isomeric cresols or methoxyphenols, araliphatic alcohols such as benzyl alcohol, anisyl alcohol or cinnamyl alcohol, secondary monoamines such as dimethylamine, diethylamine, dipropylamine, diisopropylamine, dibutylamine, bis-(2-ethylhexyl)amine, N-methyl- and N-ethylcyclohexylamine or dicyclohexylamine, and also heterocyclic secondary amines such as morpholine, pyrrolidine, piperidine or 1H-pyrazole. Preferred starter molecules are saturated monoalcohols. Particular preference is given to using diethylene glycol monobutyl ether as a starter molecule.

Alkylene oxides suitable for the alkoxylation reaction are, in particular, ethylene oxide and propylene oxide, which can be used in any order or else in a mixture in the alkoxylation reaction.

The molar mass Mₙ of these building blocks is 300 g/mol to 6000 g/mol, preferably 500 g/mol to 4000 g/mol and more preferably 750 g/mol to 3000 g/mol, for a functionality of 1.

Suitable monofunctional compounds d) of this kind with a nonionically hydrophilicizing action are, for example, monofunctional alkoxypolyethylene glycols such as, for example, methoxypolyethylene glycols (MPEG Carbowax® 2000 or Methoxy PEG-40, molar weight range 1800 to 2200, The Dow Chemical Company), monofunctional polyether monoalkyl ethers such as, for example, LB 25, synthesized from butanol and ethylene oxide and also propylene oxide, with an average molar mass Mₙ of 2250 g/mol, from Bayer Material Science, monofunctional polyetheramines (Jeffamine® M 1000, PO/EO molar ratio 3/19, and M 2070, PO/EO molar ratio 10/31, Huntsman Corp.).

Preferred for use as compound d) are MPEG Carbowax® 2000, LB 25 or Jeffamine® M 2070. Particularly preferred are MPEG Carbowax® 2000 or LB 25.

Preferably, ionic component e) may be either cationic or anionic in nature. More preferably, component e) is selected from the group of compounds containing sulphonium, ammonium, phosphonium, carboxylate, sulphonate, phosphonate groups or the groups which can be converted by salt formation into the aforementioned groups (potentially ionic groups). Isocyanate-reactive groups of preferred suitability are hydroxyl groups and amine groups.

Suitable ionic or potentially ionic compounds e) are, for example, mono- and dihydroxycarboxylic acids, mono- and diaminocarboxylic acids, mono- and dihydroxysulphonic acids, mono- and diaminosulphonic acids and mono- and dihydroxyphosphonic acids or mono- and diaminophosphonic acids and their salts such as dimethylolpropionic acid, dimethylolbutyric acid, hydroxypivalic acid, N-(2-aminoethyl)-β-alanine, 2-(2-aminoethylamino)ethanesulphonic acid, ethylenediamine-propyl- or -butylsulphonic acid, 1,2- or 1,3-propylenediamine-β-ethylsulphonic acid, malic acid, citric acid, glycolic acid, lactic acid, glycine, alanine, taurine, lysine, 3,5-diaminobenzoic acid, an adduct of IPDI and acrylic acid (EP-A 0 916 647 , Example 1) and its alkali metal salts and/or ammonium salts; the adduct of sodium bisulphite onto but-2-ene-1,4-diol, polyether-sulphonate, the propoxylated adduct of 2-butenediol and NaHSO₃, described for example in DE-A 2 446 440 (page 5-9, formula I-III), and also building blocks which can be converted into cationic groups, such as N-methyldiethanolamine, as hydrophilic synthesis components. Preferred ionic or potential ionic compounds are those which possess carboxyl or carboxylate and/or sulphonate groups and/or ammonium groups and have a functionality of 1.9 to 2.1. Particularly preferred ionic compounds have an amine functionality of 1.9 to 2.1 and contain sulphonate groups as ionic or potentially ionic groups, such as the salts of N-(2-aminoethyl)-β-alanine, of 2-(2-aminoethylamino)ethanesulphonic acid or of the adduct of IPDI and acrylic acid (EP-A 0 916 647, Example 1).

The polyamines f) used for chain extension preferably have a functionality of between 1 to 2. Preferably the polyamine f) is selected from the group consisting of diamines and polyamines. More preferably the polyamine is selected from the group consisting of ethylenediamine, 1,2- and 1,3- 1,3-diaminopropane, 1,4-diaminobutane, 1,6-diaminohexane, isophoronediamine, isomer mixture of 2,2,4- and 2,4,4-trimethylhexamethylendiamine, 2-methylpentamethylenediamine, diethylenetriamine, 1,3- and 1,4-xylylenediamine, α,α,α',α'-tetramethyl-1,3- and -1,4-xylylenediamine, 4,4-diaminodicyclohexylmethane and dimethylethylenediamine. Preferably the polyamine f) does not comprise hydrazine and hydrazine hydrate.

Also suitable in principle as component f) are compounds which contain active hydrogen with different reactivities towards NCO groups, such as compounds which as well as a primary amino group also contain secondary amino groups, or as well as an amino group (primary or secondary) also contain OH groups. Examples of such compounds are primary/secondary amines, such as 3-amino-1-methylaminopropane, 3-amino-1-ethylaminopropane, 3-amino-1-cyclohexylaminopropane, 3-amino-1-methylaminobutane, and also alkanolamines such as N-aminoethylethanolamine, ethanolamine, 3-aminopropanol or neopentanolamine.

Preference is given to isophoronediamine (IPDA).

Preferably, component g) is selected from the group consisting of carbohydrazide, oxalic dihydrazide, malonic dihydrazide, succinic dihydrazide, glutaric dihydrazide, adipic dihydrazide, heptanedioic dihydrazide, octanedioic dihydrazide, nonanedioic dihydrazide, dodecanedioic dihydrazide, hexadecanedioic dihydrazide, phthalic dihydrazide, isophthalic dihydrazide, terephthalic dihydrazide, 1,4-naphthoic dihydrazide, 2,6-naphthoic dihydrazide, 4,4'-bisbenzenedihydrazide, 2,6-pyridinedihydrazide, 1,4-cyclohexane dihydrazide, tartaric dihydrazide, malic dihydrazide, iminodiacetic dihydrazide or itaconic dihydrazide. More preferably carbohydrazide is selected as component g).

Preferably, the amount of component g) to be used in the polyurethane polymer of the invention is 0.1% weight-% to 2 weight-%, more preferably 0.1 weight-% to 1 weight-% of component g) is employed.

In another embodiment, the inventively claimed polyurethane polymer described herein contains
10 weight-% to 40 weight-% of of one or more polyisocyanate compounds selected from the group consisting of aliphatic polyisocyanates having a functionality ≥ 2 and cycloaliphatic polyisocyanates having a functionality ≥ 2,
42 weight-% to 80 weight-% of one or more polyester polyols with a molar mass Mₙ of 400 to 8000 g/mol and a functionality of 1.5 to 6,
5 weight-% to 15 weight-% of one or more nonionic, isocyanate-reactive hydrophilicizing agents,
0.7 weight-% to 5 weight of component one or more isocyanate-reactive, ionic or potentially ionic hydrophilicizing agents,
1.0 % weight-% to 7 weight-% of isophoronediamine and/or ethylenediamine, and
0.2 weight-% to 3 weight-% of of one or more dihydrazide compounds,
wherein the stated amounts relate to all structural components of the polyurethane polymer and the sum of the stated amounts adds up to 100 weight-%.

In yet another embodiment, the inventively claimed polyurethane polymer described herein contains
10 weight-% to 20 weight-% of of one or more polyisocyanate compounds selected from the group consisting of aliphatic polyisocyanates having a functionality ≥ 2 and cycloaliphatic polyisocyanates having a functionality ≥ 2,
60 weight-% to 80 weight-% of one or more polyhydroxy compounds selected from the group consisting of polyether polyols with a molar mass Mₙ of 400 to 8000 g/mol and a functionality of 1.5 to 6 and polycarbonate polyols with a molar mass Mₙ of 400 to 8000 g/mol and a functionality of 1.5 to 6,
2 weight-% to 5 weight-% of one or more nonionic, isocyanate-reactive hydrophilicizing agents,
0.7 weight-% to 3 weight of component one or more isocyanate-reactive, ionic or potentially ionic hydrophilicizing agents,
4 % weight-% to 7 weight-% of isophoronediamine and/or ethylenediamine, and
0.2 weight-% to 3.0 weight-% of of one or more dihydrazide compounds,
wherein the stated amounts relate to all structural components of the polyurethane polymer.

For preparing the PU dispersions of the invention it is possible to use all of the processes known from the prior art, such as, for example, prepolymer mixing process, acetone process or melt dispersion process. The PUR dispersion is prepared preferably by the acetone process.

Likewise provided with the present invention is a process for preparing the aqueous polyurethane dispersions of the invention, characterized in that first of all components a), b), optionally c), d) and e), if e) does not contain any primary or secondary amino groups, are reacted to prepare a polyurethane prepolymer containing free isocyanate groups in an amount of 1 weight-% to 5 weight-% related to weight of the polyurethane prepolymer which in a further step is chain-extended with optionally f) and g) and is transferred to the aqueous phase.

Likewise provided with the present invention is a process for preparing the aqueous polyurethane dispersions of the invention, characterized in that first of all components a), b), optionally c) and d), if e) does not contain any primary or secondary amino groups, are reacted to prepare a polyurethane prepolymer containing free isocyanate groups in an amount of 1 weight-% to 5 weight-% related to weight of the polyurethane prepolymer which in a further step is chain-extended with optionally e, if e) does contain any primary or secondary amino groups, f) and g) and is transferred to the aqueous phase.

For preparation of the PUR dispersion by the acetone process, typically ingredients b), optionally c), d) and e) which must contain no primary or secondary amino groups, and the polyisocyanate component a) are introduced in whole or in part as an initial charge, for the preparation of an isocyanate-functional polyurethane prepolymer containing free isocyanate groups in an amount of 1 weight-% to 5 weight-% related to weight of the polyurethane prepolymer, and are diluted if desired with a solvent which is miscible with water but is inert towards isocyanate groups, and the mixture is heated to temperatures in the range from 50 to 120°C. To accelerate the isocyanate addition reaction it is possible to use the catalysts that are known in polyurethane chemistry. Dibutyltin dilaurate is preferred.

Suitable solvents are the typical aliphatic, keto-functional solvents such as, for example, acetone, butanone, which may be added not only at the beginning of the preparation but also, if desired, in portions later on as well. Acetone or butanone is preferred.

Subsequently any ingredients a)-g) not added at the beginning of the reaction are metered in.

In the preparation of the polyurethane prepolymer the amount-of-substance ratio of isocyanate groups to isocyanate-reactive groups is 1.0 to 3.5, preferably 1.1 to 3.0, more preferably 1.1 to 2.5.

The reaction of components a), b), optionally c), d) and e) to give the prepolymer is partial or complete, but preferably complete. In this way polyurethane prepolymers are obtained, in bulk or in solution, which comprise in an amount of 1 weight-% to 5 weight-% related to weight of the polyurethane prepolymer.

Thereafter, in a further process step, if it has not yet taken place or has taken place only partially, the resultant prepolymer is dissolved with the aid of aliphatic ketones such as acetone or butanone.

After the end of the polymerization reaction the polymer solution is dispersed in water or by addition of water. The neutralization of the acid groups with amine(s) and/or bases and hence their conversion into salt groups may take place prior to dispersing or in parallel, by addition of the neutralizing amine together with the dispersing water, or by addition in parallel to the dispersing water. The degree of neutralization can be between 50% and 150%, preferably between 60% to 120%. After dispersing has taken place, a proportion or the entirety of the solvent used can be removed by distillation. Preferred neutralizing amines are dimethylethanolamine, ethyldiisopropylamine, methyldiethanolamine and 2-aminomethyl-2-methylpropanol.

This is followed by the reaction of possible NH₂- and NH-functional components f) and g) and e), if e) does contain any primary or secondary amino groups, with the remaining isocyanate groups. This chain extension/termination may be carried out either in solvent prior to dispersing, during dispersing, or in water after dispersing. Preferably the chain extension is carried out prior to dispersing in water.

Where compounds meeting the definition of e) and f) with NH₂ or NH groups are used for chain extension, the chain extension of the prepolymers takes place preferably prior to dispersing.

The degree of chain extension, in other words the equivalent ratio of NCO-reactive groups of the compounds used for chain extension to free NCO groups of the prepolymer, is situated between 40% to 100%, preferably between 60% to 100%, more preferably between 70% and 100%.

The aminic components e) and f) may be used if desired in water- or solvent-diluted form in the process of the invention, individually or in mixtures, with any sequence of addition being possible in principle.

If water or organic solvents are used as diluents as well, the diluent content is preferably 70% to 95% by weight.

The preparation of the polyurethane dispersion of the invention from the prepolymers takes place subsequent to chain extension. For that purpose either the dissolved and chain-extended polyurethane polymer is introduced into the dispersion water, where appropriate with strong shearing, such as vigorous stirring, for example, or, conversely, the dispersion water is stirred into the prepolymer solution. Preferably the water is added to the dissolved prepolymer.

The solvent present in the dispersions after the dispersing step is typically removed subsequently by distillation. Its removal actually during dispersing is likewise possible.

The solids content of the polyurethane dispersion of the invention is situated between 20% to 70% by weight, preferably 30% to 65% by weight and more preferably between 35% to 62% by weight.

The invention further provides for the use of the polyurethane dispersions of the invention for preparing coating materials for wood, plastic, metal, glass, textiles, leather, paper and also fibres such as, for example, glass fibres, polymeric fibres and graphite fibres, preferably for the production of textile coatings.

The aqueous coating compositions comprising the polyurethane dispersions of the invention may comprise auxiliaries and additives as a further component. These may be cobinders, thickeners, adhesion promoters, lubricants, wetting additives, dyes, light stabilizers, ageing inhibitors, pigments, flow control agents, antistats, UV absorbers, film-forming auxiliaries, defoamers or plasticizers, and also light stabilizers and ageing inhibitors.

The polyurethane dispersions of the invention may be used as a constituent in water-based paints for coating of surfaces. For this purpose the polyurethane dispersions of the invention are blended with further components such as, for example, aqueous dispersions based on polyester, on polyurethane, on polyurethane-polyacrylate, on polyacrylate, on polyether, on polyester-polyacrylate, on alkyd resin, on addition polymer, on polyamide/imide or on polyepoxide.

The coating may be produced by any of a variety of spraying processes such as, for example, air-pressure spraying, airless spraying or electrostatic spraying processes, using one-component or, where appropriate, two-component spraying installations. The paints and coating materials comprising the polyurethane dispersions of the invention may alternatively be applied by other methods, as for example by spreading, rolling, spraying, dipping, injecting, printing or knifecoating.

### Examples:

### Raw materials and methods:

Desmophen® PE 200 ABD: polyester polyol of adipic acid, ethylene glycol, diethylene glycol and butane diol, OHN 56, Mₙ = 2000 g·mol⁻¹ (Bayer MaterialScience AG, Leverkusen).

Desmophen® C 2200: polycarbonate polyol of hexane diol and dimethyl carbonate, OHN 56, Mₙ = 2000 g·mol⁻¹ (Bayer MaterialScience AG, Leverkusen).

PTHF 2000: polytetrahydrofurane polyol, OHN 56, Mₙ = 2000 g·mol⁻¹ Aldrich, Germany).

Polyether LB 25: monofunctional polyether based on ethylene oxide/propylene oxide, with an ethylene oxide fraction of 84%, OHN 25, Mₙ = 2250 g·mol⁻¹ (Bayer MaterialScience AG, DE).

Desmodur® H: HDI, 1,6-hexamethylene diisocyanate (Bayer MaterialScience AG, DE).

IPDA: isophoronediamine (Bayer MaterialScience AG, DE).

AAS: diaminosulphonate, 45% strength in water, H₂N-CH₂-CH₂-NH-CH₂-CH₂-SO₃Na (Bayer MaterialScience AG, DE).

HyHy : hydrazine hydrate (Aldrich, Germany)

CHY : carbohydrazide (Aldrich, Germany)

The mechanical properties of the PU dispersions are determined on free films produced as follows:
A film applicator consisting of two polished rolls which can be set an exact distance apart has a release paper inserted into it ahead of the back roll. The distance between the paper and the front roll is adjusted using a feeler gauge. This distance corresponds to the film thickness (wet) of the resulting coating, and can be adjusted to the desired add-on of each coat. Coating can also be carried out consecutively in two or more coats.

For the application of the individual coats, the products, following adjustment of the viscosity by addition of anionic acrylic polymer to 4500 mPa·s, are poured onto the nip between paper and front roll; the release paper is pulled away vertically downwards, and the corresponding film is formed on the paper. Where two or more coats are to be applied, each individual coat is dried and the paper is reinserted. The mechanical properties of these film samples are determined after 24 h of storage under standard conditions (20°C and 65% atmospheric humidity) in accordance with DIN 53504. Mechanical film properties are determined after 30 minutes of drying at 150°C. ε_{b} = elongation at break in %, σₘₐₓ = tensile strength in MPa.

To determine the degree of swelling, the free films were swollen in ethyl acetate at room for 24 h and the change in volume of the piece of film after swelling was determined by means of a ruler.

A film 0.1 - 0.2 mm thick is stamped out in a size of 50 x 20 mm and stored in ethyl acetate at room temperature for 2 hours. The swelling in volume is calculated assuming that the change is proportional in all dimensions.

To determine the calcium chloride stability, 50 g of the dispersion are initially introduced into a round-bottomed flask and stirred at room temperature. A 0.3 molar calcium chloride solution is slowly added dropwise by means of a burette. The volume of calcium chloride solution at which marked thickening or coagulation of the PU dispersion occurs is stated.

Unless indicated otherwise, all percentages are given by weight.

The solids contents were determined in accordance with DIN-EN ISO 3251.

NCO contents, unless expressly mentioned otherwise, were determined volumetrically in accordance with DIN-EN ISO 11909.

### Preparation of the PU dispersions according to the invention:

### Example 1 (comparison example)

87.4 g of HDI are added to 400 g of the polyester polyol PE 200 ABD at 50 °C and the reaction to give the prepolymer is then carried out at 100 °C until the theoretical NCO value (NCO-1 = 5.52 %) is reached. Thereafter, 866 g of acetone are added at 80 °C, the mixture is cooled to 40 °C and the prepolymer is dissolved. The chain lengthening solution of 23.1 g of IPDA and 37.1 g of AAS in 338 g of water is added and the mixture is subsequently stirred for 15 min. The product is dispersed in 432 g of water and the acetone is then distilled off under 120 mbar at 40 °C. An aqueous dispersion with a solids content of 41.3 % and a pH of 6.7 is formed.

### Example 2 (comparison example)

87.4 g of HDI are added to 393 g of the polyester polyol PE 200 ABD and 16.2 g of the monofunctional hydrophilizing agent LB25 at 50 °C and the reaction to give the prepolymer is then carried out at 100 °C until the theoretical NCO value (NCO-1 = 5.42 %) is reached. Thereafter, 882 g of acetone are added at 80 °C, the mixture is cooled to 40 °C and the prepolymer is dissolved. The chain lengthening solution of 23.1 g of IPDA and 37.1 g of AAS in 205 g of water is added and the mixture is subsequently stirred for 15 min. The product is dispersed in 579 g of water and the acetone is then distilled off under 120 mbar at 40 °C. An aqueous dispersion with a solids content of 41.6 % and a pH of 6.7 is formed.

### Example 3 (comparison example)

87.4 g of HDI are added to 400 g of the polyester polyol PE 200 ABD at 50 °C and the reaction to give the prepolymer is then carried out at 100 °C until the theoretical NCO value (NCO-1 = 5.52 %) is reached. Thereafter, 882 g of acetone are added at 80 °C, the mixture is cooled to 40 °C and the prepolymer is dissolved. The chain lengthening solution of 12.2 g of CHY and 37.1 g of AAS in 74 g of water is added and the mixture is subsequently stirred for 15 min. The product is dispersed in 588 g of water and the acetone is then distilled off under 120 mbar at 40 °C. An aqueous dispersion with a solids content of 40.5 % and a pH of 6.6 is formed.

### Example 4 (according to the invention)

87.4 g of HDI are added to 393 g of the polyester polyol PE 200 ABD and 15.8 g of the monofunctional hydrophilizing agent LB25 at 50 °C and the reaction to give the prepolymer is then carried out at 100 °C until the theoretical NCO value (NCO-1 = 5.42 %) is reached. Thereafter, 882 g of acetone are added at 80 °C, the mixture is cooled to 40 °C and the prepolymer is dissolved. The chain lengthening solution of 12.2 g of CHY and 37.1 g of AAS in 74 g of water is added and the mixture is subsequently stirred for 15 min. The product is dispersed in 693 g of water and the acetone is then distilled off under 120 mbar at 40 °C. An aqueous dispersion with a solids content of 40.7 % and a pH of 6.5 is formed.

### Example 5 (comparison example)

87.4 g of HDI are added to 393 g of the polyester polyol PE 200 ABD and 15.8 g of the monofunctional hydrophilizing agent LB25 at 50 °C and the reaction to give the prepolymer is then carried out at 100 °C until the theoretical NCO value (NCO-1 = 5.52 %) is reached. Thereafter, 882 g of acetone are added at 80 °C, the mixture is cooled to 40 °C and the prepolymer is dissolved. The chain lengthening solution of 11.6 g of IPDA, 3.4 g of HyHy and 37.1 g of AAS in 154 g of water is added and the mixture is subsequently stirred for 15 min. The product is dispersed in 615 g of water and the acetone is then distilled off under 120 mbar at 40 °C. An aqueous dispersion with a solids content of 41.3 % and a pH of 6.7 is formed.

### Example 6 (comparison example)

87.4 g of HDI are added to 393 g of the polyether polyol PTHF 2000 at 50 °C and the reaction to give the prepolymer is then carried out at 100 °C until the theoretical NCO value (NCO-1 = 5.52 %) is reached. Thereafter, 882 g of acetone are added at 80 °C, the mixture is cooled to 40 °C and the prepolymer is dissolved. The chain lengthening solution of 23.1 g of IPDA and 37.1 g of AAS in 205 g of water is added and the mixture is subsequently stirred for 15 min. The product is dispersed in 565 g of water and the acetone is then distilled off under 120 mbar at 40 °C. An aqueous dispersion with a solids content of 42.4 % and a pH of 7.0 is formed.

### Example 7 (according to the invention)

87.4 g of HDI are added to 392 g of the polyester polyol PE 200 ABD and 15.7 g of the monofunctional hydrophilizing agent LB25 at 50 °C and the reaction to give the prepolymer is then carried out at 100 °C until the theoretical NCO value (NCO-1 = 5.42 %) is reached. Thereafter, 882 g of acetone are added at 80 °C, the mixture is cooled to 40 °C and the prepolymer is dissolved. The chain lengthening solution of 12.2 g of CHY and 37.1 g of AAS in 74 g of water is added and the mixture is subsequently stirred for 15 min. The product is dispersed in 692 g of water and the acetone is then distilled off under 120 mbar at 40 °C. An aqueous dispersion with a solids content of 42.2 % and a pH of 6.6 is formed.

### Example 8 (comparison example)

87.4 g of HDI are added to 393 g of the polycarbonate polyol C2200 at 50 °C and the reaction to give the prepolymer is then carried out at 100 °C until the theoretical NCO value (NCO-1 = 5.52 %) is reached. Thereafter, 882 g of acetone are added at 80 °C, the mixture is cooled to 40 °C and the prepolymer is dissolved. The chain lengthening solution of 23.1 g of IPDA and 37.1 g of AAS in 205 g of water is added and the mixture is subsequently stirred for 15 min.

The product is dispersed in 565 g of water and the acetone is then distilled off under 120 mbar at 40 °C. An aqueous dispersion with a solids content of 40.6 % and a pH of 6.6 is formed.

### Example 9 (according to the invention)

87.4 g of HDI are added to 392 g of the polycarbonate polyol C2200 and 15.7 g of the monofunctional hydrophilizing agent LB25 at 50 °C and the reaction to give the prepolymer is then carried out at 100 °C until the theoretical NCO value (NCO-1 = 5.42 %) is reached. Thereafter, 882 g of acetone are added at 80 °C, the mixture is cooled to 40 °C and the prepolymer is dissolved. The chain lengthening solution of 12.2 g of CHY and 37.1 g of AAS in 74 g of water is added and the mixture is subsequently stirred for 15 min. The product is dispersed in 692 g of water and the acetone is then distilled off under 120 mbar at 40 °C. An aqueous dispersion with a solids content of 41.4 % and a pH of 6.9 is formed.

| **trial** | **100%-mod. [MPa]** | **elongation [%]** | **tensile strength [MPa]** | **CaCl2 [mL]** | **swelling EA [Vol-%]** |
|---|---|---|---|---|---|
| 1* | 1.6 | 2,160 | 21.8 | 19 | 325 |
| 2* | 1.2 | 2,470 | 16.6 | > 150 | 445 |
| 3* | 1.8 | 2,250 | 18.9 | 33 | 358 |
| 4 | 2.4 | 1,870 | 18.5 | > 150 | 152 |
| 5* | 1.8 | 1,830 | 11.1 | > 150 | 175 |
| 6* | 2.2 | 1,480 | 26.6 | 33 | 310 |
| 7 | 3.3 | 1,020 | 29.0 | > 150 | 100 |
| 8* | 2.9 | 560 | 16.5 | 100 | 224 |
| 9 | 3.7 | 870 | 39.9 | > 150 | 73 |

As can be seen, only the dispersions according to the invention show a combination of better mechanical properties with at the same time a high electrolyte stability. Comparison Example 5* demonstrates that the structurally similar hydrazine is not so effective as a chain lengthener.

## Claims

1. Aqueous polyurethane dispersions containing an anionically hydrophilized and non-ionically hydrophilized polyurethane polymer comprising
a) 8 weight-% to 40 weight-% of one or more polyisocyanate compounds selected from the group consisting of aromatic polyisocyanates having a functionality ≥ 2, aliphatic polyisocyanates having a functionality ≥ 2 and cycloaliphatic polyisocyanates having a functionality ≥ 2,
b) 40 weight-% to 85 weight-% of one or more polyhydroxy compounds with a molar mass Mₙ of 400 to 8000 g/mol and a functionality of 1.5 to 6,
c) optionally one or more polyhydroxy compounds with a molar mass < 400 g/mol and a functionality of 2 to 4,
d) 1 weight-% to 25 weight-% of one or more nonionic, isocyanate-reactive hydrophilicizing agents,
e) 0.5 weight-% to 7 weight-% of one or more isocyanate-reactive, ionic or potentially ionic hydrophilicizing agents,
f) optionally one or more polyamines having a molar mass of 32 to 400 g/mol and a functionality of 1 to 3, and
g) 0.1 weight-% to 4 weight-% of one or more dihydrazide compounds,
wherein the stated amounts relate to all structural components of the polyurethane polymer,
wherein the aqueous polyurethane dispersions of the invention are prepared by first reacting components a), b), optionally c), d) and e), if e) does not contain any primary or secondary amino groups, to prepare a polyurethane prepolymer containing free isocyanate groups in an amount of 1 weight-% to 5 weight-%, related to weight of the polyurethane prepolymer, which in a further step is chain-extended with components optionally f) and g) and e), if e) does contain any primary or secondary amino groups, and is transferred to the aqueous phase
and wherein the degree of chain extension, corresponding to the equivalent ratio of NCO-reactive groups of the compounds used for chain extension to free NCO groups of the prepolymer, is situated between 40% to 100%.

2. The aqueous polyurethane dispersion according to claim 1, **characterized in that** the polyurethane polymer contains
10 weight-% to 40 weight-% of component a),
42 weight-% to 80 weight-% of component b),
2 weight-% to 21 weight-% of component d),
0.7 weight-% to 5 weight of component e) and
0.2 weight-% to 3 weight-% of component g),
wherein the stated amounts relate to all structural components of the polyurethane polymer.

3. The aqueous polyurethane dispersion according to claim 1 or 2, **characterized in that** component g) is selected from the group consisting of carbohydrazide, oxalic dihydrazide, malonic dihydrazide, succinic dihydrazide, glutaric dihydrazide, adipic dihydrazide, heptanedioic dihydrazide, octanedioic dihydrazide, nonanedioic dihydrazide, dodecanedioic dihydrazide, hexadecanedioic dihydrazide, phthalic dihydrazide, isophthalic dihydrazide, terephthalic dihydrazide, 1,4-naphthoic dihydrazide, 2,6-naphthoic dihydrazide, 4,4'-bisbenzenedihydrazide, 2,6-pyridinedihydrazide, 1,4-cyclohexane dihydrazide, tartaric dihydrazide, malic dihydrazide, iminodiacetic dihydrazide and itaconic dihydrazide.

4. The aqueous polyurethane dispersion according to claim 1 or 2, **characterized in that** component g) is carbohydrazide.

5. Aqueous polyurethane dispersions according to claim 1 or 2, **characterized in that** component b) is selected from the group consisting of polyester polyols, polyether polyols and polycarbonate polyols.

6. Aqueous polyurethane dispersions according to claim 1, **characterized in that** component f) is selected from the group consisting of ethylene diamine and isophorone diamine.

7. Aqueous polyurethane dispersion according to claim 1 or 2, **characterized in that** component d) are polyoxyalkylene ethers which contain at least one hydroxyl or amino group.

8. Process for preparing the aqueous polyurethane dispersions according to one or more of claims 1 to 7, **characterized in that** first of all components a), b), optionally c), d) and e), if e) does not contain any primary or secondary amino groups, which are in each case defined as in claim 1 are reacted to prepare a polyurethane prepolymer containing free isocyanate groups in an amount of 1 weight-% to 5 weight-% related to weight of the polyurethane prepolymer, which in a further step is chain-extended with components optionally f) and g) and e), if e) does contain any primary or secondary amino groups, which are in each case defined as in claim 1 and is transferred to the aqueous phase.

9. Use of the polyurethane dispersions according to claim 1 for preparing coating materials that are suitable for coating materials selected from the group consisting of wood, plastic, metal, glass, textiles, leather, paper and fibres.

10. Use according to claim 9, **characterized in that** the material is textiles.

## Patentansprüche

1. Wässrige Polyurethandispersionen, enthaltend ein anionisch hydrophiliertes und nichtionisch hydrophiliertes Polyurethanpolymer, das
a) 8 bis 40 Gew.-% mindestens einer Polyisocyanatverbindung aus der Gruppe bestehend aus aromatischen Polyisocyanaten mit einer Funktionalität ≥ 2, aliphatischen Polyisocyanaten mit einer Funktionalität ≥ 2 und cycloaliphatischen Polyisocyanaten mit einer Funktionalität ≥ 2,
b) 40 bis 85 Gew.-% mindestens eine Polyhydroxyverbindung mit einer Molmasse Mₙ von 400 bis 8000 g/mol und einer Funktionalität von 1,5 bis 6,
c) gegebenenfalls mindestens einer Polyhydroxyverbindung mit einer Molmasse < 400 g/mol und einer Funktionalität von 2 bis 4,
d) 1 bis 25 Gew.-% mindestens eines nichtionischen, Isocyanat-reaktiven Hydrophilierungsmittels,
e) 0,5 bis 7 Gew.-% mindestens eines Isocyanat-reaktiven, ionischen oder potentiell ionischen Hydrophilierungsmittels,
f) gegebenenfalls mindestens ein Polyamin mit einer Molmasse von 32 bis 400 g/mol und einer Funktionalität von 1 bis 3 und
g) 0,1 bis 4 Gew.-% mindestens einer Dihydrazidverbindung
umfasst,
wobei sich die genannten Mengen auf alle Aufbaukomponenten des Polyurethanpolymers beziehen, wobei man die erfindungsgemäßen wässrigen Polyurethandispersionen herstellt, indem man zunächst Komponenten a), b), gegebenenfalls c), d) und e), falls e) keine primären oder sekundären Aminogruppen enthält, zu einem Polyurethanpräpolymer, das freie Isocyanatgruppen in einer Menge von 1 bis 5 Gew.-%, bezogen auf das Gewicht des Polyurethanpräpolymers, enthält, umsetzt, das man in einem weiteren Schritt mit den Komponenten g) und gegebenenfalls f) und e), falls e) primäre oder sekundäre Aminogruppen enthält,
ketten verlängert und in die wässrige Phase überführt
und wobei der Kettenverlängerungsgrad, der dem Äquivalentverhältnis der NCO-reaktiven Gruppen der für die Kettenverlängerung verwendeten Verbindungen zu den freien NCO-Gruppen des Präpolymers entspricht, zwischen 40 bis 100 % liegt.

2. Wässrige Polyurethandispersion nach Anspruch 1, **dadurch gekennzeichnet, dass** das Polyurethanpolymer
10 bis 40 Gew.-% der Komponente a),
42 bis 80 Gew.-% der Komponente b),
2 bis 21 Gew.-% der Komponente d),
0,7 bis 5 Gew.-% der Komponente e) und
0,2 bis 3 Gew.-% der Komponente g)
enthält, wobei sich die genannten Mengen auf alle Aufbaukomponenten des Polyurethanpolymers beziehen.

3. Wässrige Polyurethandispersion nach Anspruch 1 oder 2, **dadurch gekennzeichnet, dass** Komponente g) aus der Gruppe bestehend aus Carbohydrazid, Oxalsäuredihydrazid, Malonsäuredihydrazid, Bernsteinsäuredihydrazid, Glutarsäuredihydrazid, Adipinsäuredihydrazid, Heptandisäuredihydrazid, Octandisäuredihydrazid, Nonandisäuredihydrazid, Dodecandisäuredihydrazid, Hexadecandisäurehydrazid, Phthalsäuredihydrazid, Isophthalsäuredihydrazid, Terephthalsäuredihydrazid, 1,4-Naphthoesäuredihydrazid, 2,6-Naphthoesäuredihydrazid, 4,4'-Bisbenzoldihydrazid, 2,6-Pyridindihydrazid, 1,4-Cyclohexandihydrazid, Weinsäuredihydrazid, Äpfelsäuredihydrazid, Iminodiessigsäuredihydrazid und Itaconsäuredihydrazid ausgewählt ist.

4. Wässrige Polyurethandispersion nach Anspruch 1 oder 2, **dadurch gekennzeichnet, dass** es sich bei Komponente g) um Carbohydrazid handelt.

5. Wässrige Polyurethandispersionen nach Anspruch 1 oder 2, **dadurch gekennzeichnet, dass** Komponente b) aus der Gruppe bestehend aus Polyesterpolyolen, Polyetherpolyolen und Polycarbonatpolyolen ausgewählt ist.

6. Wässrige Polyurethandispersionen nach Anspruch 1, **dadurch gekennzeichnet, dass** Komponente f) aus der Gruppe bestehend aus Ethylendiamin und Isophorondiamin ausgewählt ist.

7. Wässrige Polyurethandispersion nach Anspruch 1 oder 2, **dadurch gekennzeichnet, dass** es sich bei Komponente d) um Polyoxyalkylenether, die mindestens eine Hydroxy- oder Aminogruppe enthalten, handelt.

8. Verfahren zur Herstellung wässriger Polyurethandispersionen nach einem oder mehreren der Ansprüche 1 bis 7, **dadurch gekennzeichnet, dass** man zunächst die Komponenten a), b), gegebenenfalls c), d) und e), falls e) keine wie jeweils in Anspruch 1 definierten primären oder sekundären Aminogruppen enthält, zu einem Polyurethanpräpolymer, das freie Isocyanatgruppen in einer Menge von 1 bis 5 Gew.-%, bezogen auf das Gewicht des Polyurethanpräpolymers, enthält, umsetzt, das man in einem weiteren Schritt mit den Komponenten g) und gegebenenfalls f) und e), falls e) wie jeweils in Anspruch 1 definierte primäre oder sekundäre Aminogruppen enthält, kettenverlängert und in die wässrige Phase überführt.

9. Verwendung der Polyurethandispersionen nach Anspruch 1 zur Herstellung von Beschichtungsmaterialien, die sich zur Beschichtung von Materialien aus der Gruppe bestehend aus Holz, Kunststoff, Metall, Glas, Textilien, Leder, Papier und Fasern eignen.

10. Verwendung nach Anspruch 9, **dadurch gekennzeichnet, dass** es sich bei dem Material um Textilien handelt.

## Revendications

1. Dispersions aqueuses de polyuréthane contenant un polymère de polyuréthane à hydrophilisation anionique et à hydrophilisation non ionique comprenant
a) 8 % en poids à 40 % en poids d'un ou plusieurs composés de polyisocyanate choisis dans le groupe constitué de polyisocyanates aromatiques ayant une fonctionnalité ≥ 2, polyisocyanates aliphatiques ayant une fonctionnalité ≥ 2 et polyisocyanates cycloaliphatiques ayant une fonctionnalité ≥ 2,
b) 40 % en poids à 85 % en poids d'un ou plusieurs composés polyhydroxy ayant une masse molaire Mₙ de 400 à 8000 g/mol et une fonctionnalité de 1,5 à 6,
c) facultativement un ou plusieurs composés polyhydroxy ayant une masse molaire < 400 g/mol et une fonctionnalité de 2 à 4,
d) 1 % en poids à 25 % en poids d'un ou plusieurs agents hydrophilisants non ioniques, réactifs avec l'isocyanate,
e) 0,5 % en poids à 7 % en poids d'un ou plusieurs agents hydrophilisants, ioniques ou potentiellement ioniques, réactifs avec l'isocyanate,
f) facultativement une ou plusieurs polyamines ayant une masse molaire de 32 à 400 g/mol et une fonctionnalité de 1 à 3, et
g) 0,1 % en poids à 4 % en poids d'un ou plusieurs composés dihydrazides,
dans lesquelles les quantités indiquées sont par rapport à tous les composants structuraux du polymère de polyuréthane,
les dispersions aqueuses de polyuréthane de l'invention étant préparées par réaction, dans un premier temps, des composants a), b), facultativement c), d) et e), si e) ne contient pas de groupes amino primaires ou secondaires, pour préparer un prépolymère de polyuréthane contenant des groupes isocyanate libres en une quantité de 1 % en poids à 5 % en poids, par rapport au poids du prépolymère de polyuréthane qui, dans une étape supplémentaire est soumis à une extension de chaîne avec les composants facultatifs f) et g) et e), si e) contient des groupes amino primaires ou secondaires, et est transféré dans la phase aqueuse et dans lesquelles le degré d'extension de chaîne, correspondant au rapport équivalent de groupes réactifs avec NCO des composés utilisés pour l'extension de chaîne aux groupes NCO libres du prépolymère, est situé entre 40 % et 100 %.

2. Dispersion aqueuse de polyuréthane selon la revendication 1, **caractérisée en ce que** le polymère de polyuréthane contient
10 % en poids à 40 % en poids de composant a),
42 % en poids à 80 % en poids de composant b),
2 % en poids à 21 % en poids de composant d),
0,7 % en poids à 5 poids de composant e) et
0,2 % en poids à 3 % en poids de composant g),
dans laquelle les quantités indiquées sont par rapport à tous les composants structuraux du polymère de polyuréthane.

3. Dispersion aqueuse de polyuréthane selon la revendication 1 ou 2, **caractérisée en ce que** le composant g) est choisi dans le groupe constitué des carbohydrazide, dihydrazide oxalique, dihydrazide malonique, dihydrazide succinique, dihydrazide glutarique, dihydrazide adipique, dihydrazide heptanedioïque, dihydrazide octanedioïque, dihydrazide nonanedioïque, dihydrazide dodécanedioïque, dihydrazide hexadécanedioïque, dihydrazide phtalique, dihydrazide isophtalique, dihydrazide téréphtalique, dihydrazide 1,4-naphtoïque, dihydrazide 2,6-naphtoïque, 4,4'-bisbenzènedihydrazide, 2,6-pyridinedihydrazide, 1,4-cyclohexanedihydrazide, dihydrazide tartrique, dihydrazide malique, dihydrazide iminodiacétique et dihydrazide itaconique.

4. Dispersion aqueuse de polyuréthane selon la revendication 1 ou 2, **caractérisée en ce que** le composant g) est le carbohydrazide.

5. Dispersions aqueuses de polyuréthane selon la revendication 1 ou 2, **caractérisées en ce que** le composant b) est choisi dans le groupe constitué de polyester polyols, polyéther polyols et polycarbonate polyols.

6. Dispersions aqueuses de polyuréthane selon la revendication 1, **caractérisées en ce que** le composant f) est choisi dans le groupe constitué de l'éthylènediamine et de l'isophoronediamine.

7. Dispersion aqueuse de polyuréthane selon la revendication 1 ou 2, **caractérisée en ce que** les composants d) sont des poly(éthers d'oxyalkylène) qui contiennent au moins un groupe hydroxyle ou amino.

8. Procédé de préparation des dispersions aqueuses de polyuréthane selon une ou plusieurs des revendications 1 à 7, **caractérisé en ce que**, dans un premier temps, les composants a), b), facultativement c), d) et e), si e) ne contient pas de groupes amino primaires ou secondaires, qui sont dans chaque cas définis selon la revendication 1, réagissent pour préparer un prépolymère de polyuréthane contenant des groupes isocyanate libres en une quantité de 1 % en poids à 5 % en poids par rapport au poids du prépolymère de polyuréthane, qui, dans une étape supplémentaire, subit une extension de chaîne avec des composants facultatifs f) et g) et e), si e) contient des groupes amino primaires ou secondaires, qui sont dans chaque cas définis selon la revendication 1 et est transféré dans la phase aqueuse.

9. Utilisation des dispersions de polyuréthane selon la revendication 1 pour préparer des matériaux de revêtement qui sont adaptés pour revêtir des matériaux choisis dans le groupe constitué du bois, du plastique, des métaux, du verre, des textiles, du cuir, du papier et de fibres.

10. Utilisation selon la revendication 9, **caractérisée en ce que** le matériau est un textile.
